# EUROPÄISCHE PATENTSCHRIFT

(11) **EP 2 235 028 B1**
(45) Veröffentlichungstag und Bekanntmachung des Hinweises auf die Patenterteilung: **12.09.2012**
(21) Anmeldenummer: 09700501.1
(22) Anmeldetag: 07.01.2009
(51) Int. Cl.: C07F 9/38

(54) **VERFAHREN ZUR HERSTELLUNG VON PHOSPHONSÄUREANHYDRIDEN**
PROCESS FOR PREPARING PHOSPHONIC ANHYDRIDES
PROCÉDÉ DE PRODUCTION D'ANHYDRIDES D'ACIDE PHOSPHONIQUE

(30) Priorität: 09.01.2008 DE 102008003677
(43) Veröffentlichungstag der Anmeldung: 06.10.2010
(73) Patentinhaber: Euticals GmbH, 65929 Frankfurt am Main (DE)
(72) Erfinder: LEHNEMANN, Bernd, Wilhelm, 51063 Köln (DE); WISDOM, Richard, 65817 Eppstein (DE)
(74) Vertreter: Schweitzer, Klaus
(86) Internationale Anmeldenummer: PCT/EP2009/000032
(87) Internationale Veröffentlichungsnummer: WO 2009/087084

(56) Entgegenhaltungen:
- EP-A- 0 002 733
- EP-A- 0 015 483
- DE-A1- 10 333 042
- HIRSCHMANN R ET AL: "PHOSPHONYLTRIETHYLAMMONIUM SALTS: NOVEL REACTIVE SPECIES FOR THE SYNTHESIS OF PHOSPHONATE ESTERS AND PHOSPHONAMIDES" JOURNAL OF THE AMERICAN CHEMICAL SOCIETY, AMERICAN CHEMICAL SOCIETY, WASHINGTON, DC., US, Bd. 117, Nr. 23, 14. Juni 1995 (1995-06-14), Seite 6370/6371, XP000509212 ISSN: 0002-7863

## Beschreibung

### Beschreibung

Die vorliegende Erfindung betrifft ein Verfahren zur Herstellung von ggf. organisch substituierten Phosphonsäureanhydriden direkt aus den entsprechenden Phosphonsäurediestern, ohne dass die freie Phosphonsäure als Zwischenprodukt benötigt wird.

### Stand der Technik

Alkanphosphonsäureanhydride, insbesondere das cyclische trimere Alkanphosphonsäureanhydrid, werden u.a. als Reagentien zur Knüpfung von Peptidbindungen (Kleiner, Wissmann, Angew. Chem. Int. Ed. 1980, 19, 133), zur Herstellung von Nitrilen und Isonitrilen durch Dehydrierung (EP-A-1 713 763; DE102005035250), zur Herstellung von Alkenen durch Eliminierung (EP-A-1 763 497), zur Aktivierung von Dimethylsulfoxid in Oxidationsreaktionen (EP-A-1 744 999) u.v.a.m. eingesetzt.

Zur Herstellung von Phosphonsäureanhydriden sind unterschiedliche Methoden bekannt, die im allgemeinen von den entsprechenden Alkanphosphonsäuren ausgehen. Die DE-A-22 25 545 beschreibt die Überführung von Alkanphosphonsäuren in ihre Säurehalogenide, z.B. mit Phosphortrichlorid, Thionylchlorid oder Phosgen. Das erhaltene Alkylphosphonsäuredihalogenid kann dann mit einer stöchiometrischen Menge Wasser oder bevorzugt einem weiteren Äquivalent Alkanphosphonsäure unter Freisetzung von Halogenwasserstoff zum Alkanphosphonsäureanhydrid umgesetzt werden (EP-A-0 015 483); s. Reaktionsschema 1.

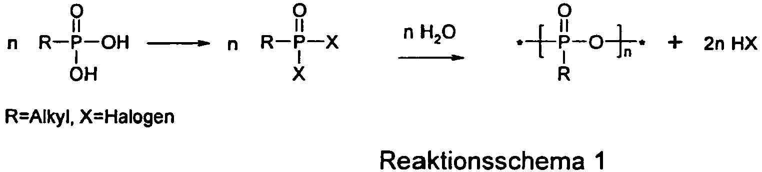

Die Freisetzung von giftigem und hochkorrosivem Halogenwasserstoff macht die technische Umsetzung dieses Verfahrens problematisch, auch wird kein halogenidfreies Produkt erhalten, wodurch Korrosionsprobleme in der weiteren Verwendung des Produkts resultieren können.

Eine Variante dieses Verfahrens besteht in der Umsetzung der Alkanphosphonsäurechloride mit Alkanphosphonsäuredimethylester, wobei Chlormethan entsteht (Grant, Van Wazer, Dungan, J. Polym. Science 1967, A-15, 57); s. Reaktionsschema 2. Die Emission von potentiell krebserzeugendem Chlormethan erschwert die technische Umsetzung dieses Verfahrens.

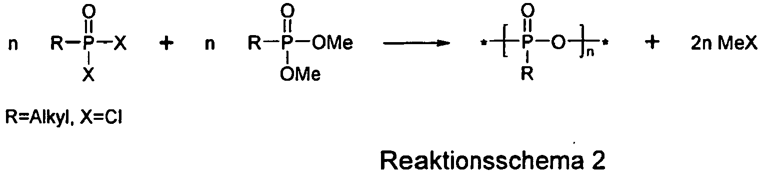

Die Kondensation von Alkanphosphonsäuren unter Entfernung des Reaktionswassers unter Zuhilfenahme eines wasserbindenden Mittels wird z.B. in EP-A-0 002 733 (mittels aliphatischer Carbonsäureanhydride), s. Reaktionsschema 3 und EP-A-0 650 972 (mittels Diketen) beschrieben.

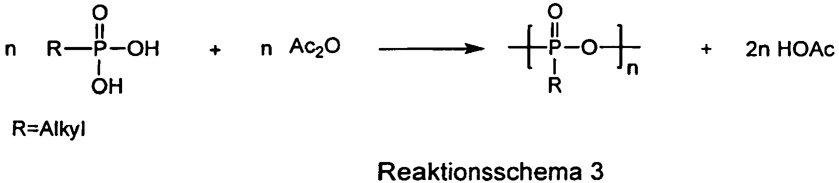

Eine Möglichkeit, cyclisches trimeres Alkanphosphonsäureanhydrid aus dem durch Kondensation von Alkanphosphonsäuren entstehenden Gemisch aus kettenförmigen und cyclischen Anhydriden zu erhalten, besteht in einer Reaktivdestillation, bei der das cyclische Trimere destillativ entfernt wird (DE-A-10 333 042).

Allen diesen Herstellwegen ist gemeinsam, dass sie als Intermediate die freie Alkanphosphonsäure benötigen. Da diese im allgemeinen durch Hydrolyse der technisch leicht erhältlichen (z.B. durch Addition von Dialkylphosphiten an Olefine) Alkanphosphonsäurediestern hergestellt werden muss, ergibt sich in jedem dieser Herstellprozesse zwingend eine wässrige Hydrolyseoperation - häufig unter drastischen Bedingungen, d.h. Temperaturen von 150 bis 250 °C unter erhöhtem Druck (siehe z.B. DE-A-31 10 975) - gefolgt von einer Entwässerung- und ggf. auch Reinigungsoperation, wodurch besondere Apparaturen aus korrosionsbeständigen Materialien (Nickel-Basislegierungen) notwendig werden und große Mengen organisch belastetes Abwasser erzeugt werden.

### Aufgabenstellung

Es wäre wünschenswert, ein Herstellungsverfahren zu haben, das aus den marktgängigen Phosphonsäurediestern direkt, ohne den Umweg einer Hydrolyse und/oder Umwandlung in ein Phosphonsäurehalogenid, das halogenidfreie Phosphonsäureanhydrid erzeugt, ohne hochkorrosive Nebenprodukte zu erzeugen, vorzugsweise auch unter Vermeidung der Erzeugung cancerogener Abfälle.

Diese Aufgabe wird gelöst durch ein Verfahren zur direkten Umwandlung von Phosphonsäurediestern in Phosphonsäureanhydride, bestehend in der Umsetzung von Phosphonsäurediestern mit einem Carbonsäureanhydrid oder Carbonsäurehalogenid in Gegenwart eines sauren z.B. Lewis-sauren Katalysators unter laufender Entfernung des bei die Reaktion entstehenden Carbonsäureesters bzw. Alkylhalogenids aus dem Reaktionsgemisch (Reaktionsschema 4). Zur Anreicherung des Anhydrids kann ggf. die in DE-A-10 333 042 beschriebene Reaktivdestillation nachgeschaltet werden.

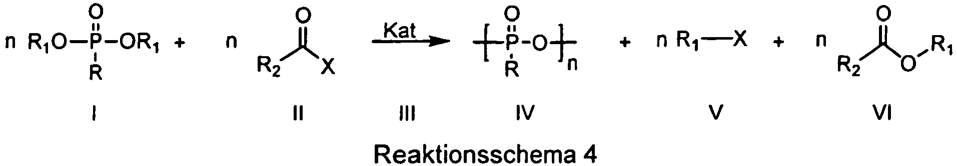

Dabei steht
- R: für C₃-C₈-Allyl, C₆-C₁₀-Aryl oder C₁- C₈-Alkyl, wobei der Alkylrest im Falle der C₃-C₈-Verbindungen geradkettig, verzweigt oder cyclisch ist, C₆-C₁₂-Aryloxy, C₃-C₁₀-Allyloxy oder C₁- C₈-Alkyloxy, wobei der Alkyoxyrest im Falle der C₃-C₈-Verbindungen geradkettig, verzweigt oder cyclisch ist und wobei alle genannten Substituenten gegebenenfalls ein- oder mehrfach mit identischen oder nicht identischen, nicht an der Reaktion teilnehmenden Funktionen (z.B. Fluor) substituiert sind;
- X: steht für O-(C=O)-R₃, Chlor oder Brom;
- R1: welches in Formel I identisch oder verschieden ist, steht für C₆-C₁₀-Aryl oder C₁-C₈-Alkyl, wobei der Alkylrest im Falle der C₃-C₈-Verbindungen geradkettig, verzweigt oder cyclisch ist, und wobei alle genannten Substituenten gegebenenfalls ein- oder mehrfach mit identischen oder nicht identischen, nicht an der Reaktion teilnehmenden Funktionen, substituiert sind;
- R2 und R3: sind gleich oder verschieden und haben die Bedeutung von R1
- n: steht für eine natürliche Zahl von 2 bis 200, bevorzugt 3 bis 60, besonders bevorzugt 3 bis 20 und ganz besonders bevorzugt 3;
- Kat: ist optional und steht für eine Brønsted- oder Lewis-Säure, die in der Lage ist, die Reaktion zu katalysieren, jedoch unter den Reaktionsbedingungen nicht stark flüchtig ist.

Das Produkt IV ist ein Gemisch aus cyclischen und offenkettigen vollständigen oder unvollständigen Phosphonsäureanhydriden. Entsprechend ist die ganze Zahl "n" nur bei cyclischen Anhydriden in Reaktionsschema 4 bei allen Reaktanden identisch. Wie für den Fachmann offensichtlich, wird bei Bildung von offenkettigen Anhydriden ein Equivalent II weniger benötigt, um ein Poylmer mit n Phoshoratomen zu erhalten, da die Kettenenden noch mit R1 bzw. OR1 abgesättigt sind.

R, R1, R2 und R3 stehen bevorzugt für gegebenenfalls substituierte C₁- bis C₄-Alkylgruppen, die geradkettig oder im Falle der C₃-C₄-Alkylgruppen verzweigt oder cyclisch sein können. Die beiden Substituenten R1 in Formel I haben bevorzugt die gleiche Bedeutung; ebenso sind R2 und R3 bevorzugt paarweise identisch und so geartet, dass der während der Reaktion entstehende Carbonsäureester bzw. das entstehende Halogenalkan einfach (bspw. destillativ) aus dem Reaktionsgemisch entfernt werden kann.

Besonders bevorzugt ist
R Methyl, Ethyl, Propyl, Isopropyl, Methylpropyl, Butyl, Isobutyl oder tert.-Butyl,
R1 in Formel bleich und bedeutet Methyl, Ethyl oder Isopropyl und
R2 ist Methyl und
X Chlor oder -O(CO)R3 mit R3= Methyl.

Ganz besonders bevorzugt ist X= O-(C=O)-R₃ und R₁=R₂=R₃ =Methyl und R=Methyl, Ethyl, Propyl, Isopropyl, Butyl, Isobutyl oder tert-Butyl, insbesondere Propyl.

Kat ist bevorzugt konzentrierte Schwefelsäure, konzentrierte Phosphorsäure, Borsäure, Trifluormethan-sulfonsäure oder eine höhere Perfluoralkansulfonsäure oder deren Salze wie Scandiumtriflat, Yttriumtriflat, Lanthantriflat oder ein Lanthanoidtriflat, Alkansulfonsäure, Arensulfonsäure, Arencarbonsäure, Alkancarbonsäure, wie Chloressigsäure, eine Perfluorcarbonsäure, wie Trifluoressigsäure oder Trichloressigsäure, eine organisch substituierte Phosphonsäure oder ein stark saurer Ionentauscher (z.B. Amberlyst® 15).

Bevorzugt werden 0 bis 5 mol%, besonders bevorzugt 0,5 bis 5 mol% an Katalysator bezogen auf den Einsatz an Phosphonsäureester eingesetzt.

Fluorsulfonsäure, Bortrifluorid, Titantetrachlorid, Antimonpentafluorid, Zinkchlorid, Eisen(III)-chlorid oder Aluminiumchlorid können ebenfalls als Katalysator eingesetzt werden, man erhält jedoch in diesem Fall im allgemeinen kein halogenidfreies Produkt.

Besonders bevorzugt ist der Einsatz von nichtoxidierenden Brønsted-Säuren und halogenidfreien Lewis-Säuren. Der Katalysator kann in bestimmten Fällen mehrfach verwendet werden; insbesondere Kationentauscher sind aufgrund der einfachen Re-Isolierbarkeit durch Filtration dafür geeignet.

Unter "nicht an der Reaktion teilnehmenden Funktionen" werden Substituenten wie Fluor oder Trifluormethyl verstanden.

Die Reaktion kann in einem Lösungsmittel durchgeführt werden, welches nicht an der Reaktion teilnimmt, wird jedoch bevorzugt in Substanz oder unter Einsatz eines Überschusses an Carbonsäureanhydrid bzw. Carbonsäurehalogenid als Lösungsmittel durchgeführt.

Die Entfernung der gebildeten Nebenprodukte (Carbonsäureester, ggf. Aryl- oder Alkylhalogenide) geschieht bevorzugt durch Destillation unter geeigneten Bedingungen. Ebenfalls möglich ist z.B. eine extraktive Entfernung, z.B. mit hoch fluorierten Lösungsmitteln bei Verwendung von hoch fluorierten R2/R3.

Es wird minimal ein Mol-Äquivalent des Carbonsäureanhydrids bzw. -halogenids zur vollständigen Anhydridisierung benötigt; um Verluste z.B. bei destillativer Entfernung der entstehenden Nebenprodukte auszugleichen, werden üblicherweise 1.01 bis 100 Äquivalente, bevorzugt 1.2 bis 10 Äquivalente und besonders bevorzugt 1.2 bis 4 Äquivalente eingesetzt.

Besonders bevorzugt ist eine Zusammenfassung der Reaktion mit einer anschließenden Reaktivdestillation, um überwiegend das cyclische trimere Phosphonsäureanhydrid zu erhalten; ganz besonders bevorzugt als Ein-Topf-Variante.

Eine weitere bevorzugte Variante des erfindungsgemäßen Verfahrens besteht in der Umsetzung des destillativ von Leichtsiedern befreiten Rohprodukts in Gegenwart einer gegenüber IV nicht reaktiven Base (z.B. einem tertiären Amin) zur Neutralisation des Katalysators mit dem oder den Reaktanden der geplanten Folgereaktion (in einer bestimmungsgemäßen Verwendung, z.B. in einer Kupplungsreaktion, Dehydrierung, etc.) (d.h. ohne weitere Aufarbeitung oder Isolation von IV).

Eine weitere bevorzugte Variante des erfindungsgemäßen Verfahrens besteht in der Umsetzung des destillativ von Leichtsiedern und dem Katalysator (bei durch Destillation entfernbaren Katalysatoren, z.B. Trifluormethansulfonsäure oder niederen Alkancarbonsäuren) befreiten Rohprodukts mit dem oder den Reaktanden der geplanten Folgereaktion (s.o.) (ebenfalls ohne weitere Aufarbeitung oder Isolation von IV).

Eine weitere bevorzugte Variante besteht im Einsatz der von I abgeleiteten Phosphonsäure bzw. der von II abgeleiteten Carbonsäure als Katalysator, um ein besonders schmales Verunreinigungs- und Nebenproduktspektrum zu erhalten.

Bei Bedarf kann durch Behandlung mit Aktivkohle die Farbe des Rohprodukts oder des durch Destillation isolierten Produkts IV verbessert werden, gegebenenfalls in einem inerten Lösungsmittel.

Temperatur- und Druckbedingungen während der Reaktion werden in Abhängigkeit der eingesetzten Ausgangsmaterialien so gewählt, dass die Reaktion mit ausreichender Geschwindigkeit abläuft, die Entfernung des Nebenprodukts möglich ist und dabei möglichst geringe Verluste an Carbonsäureanhydrid/-halogenid und/oder Katalysator auftreten.

Ganz besonders bevorzugt wird die Erfindung zur Herstellung von Methan-, Ethan-, Methylethan-, Propan-, Methylpropan-, Butan-, Isobutan- und tert-Butanphosphonsäureanhydrid aus den entsprechenden Phosphonsäuredimethylestern mittels Essigsäureanhydrid oder Acetylchlorid eingesetzt, wobei das entstehende Methylacetat bzw. Chlormethan bei Normaldruck abdestilliert wird, während die Temperatur im Sumpf unter der Siedetemperatur des Essigsäureanhydrids gehalten wird, solange destilliert wird, bis kein Methylacetat mehr gebildet wird, dann weiter bis zu einer Sumpftemperatur von 150 bis 250 °C erhitzt wird, um ggf. im Überschuß vorhandenes Acetanhydrid und ggf. destillierbaren Katalysator abzudestillieren, und zum Schluss Reste flüchtiger Bestandteile im Hochvakuum entfernt werden und das Produkt im Hochvakuum destilliert wird.

Gegenüber dem Stand der Technik besitzt das beschriebene Verfahren den Vorteil, dass es von den käuflichen bzw. leicht durch Addition von Dialkylphosphiten an Olefine erhältlichen Phosphonsäurediestern ausgeht und unter Umgehung einer Verseifung der Phosphonsäureester direkt das gewünschte - unter Verwendung von Carbonsäureanhydriden auch halogenidfreie - Phosphonsäureanhydrid erzeugt, wodurch die Wirtschaftlichkeit der Herstellung stark erhöht wird, da der Herstellprozess signifikant verkürzt wird, keine spezielle Hydrolyseapparatur benötigt wird und kein belastetes Abwasser erzeugt wird. Die anfallenden Abfalldestillate können mit positiver Energiebilanz thermisch verwertet werden.

### Beispiele

### Beispiel 1

### Herstellung von Propanphosphonsäureanhydrid aus Propanphosphonsäuredimethylester und Acetanhydrid mit Schwefelsäure als Katalysator

45.64 (0.3 mol) Propanphosphonsäuredimethylester wurden unter Feuchtigkeitsausschluss mit 0.74 g (7.5 mmol, 2.5 mol%) konzentrierter Schwefelsäure versetzt. Unter Rühren wurden 30.62 g (0.3 mol) Acetanhydrid zugetropft und das Reaktionsgemisch an einer kurzen Vigreux-Kolonne erhitzt. Bei einer Sumpftemperatur von 175 °C und einer Kopftemperatur von 65 bis 70 °C wurde ein Destillat aufgefangen, das zum größten Teil aus Methylacetat bestand und etwas Essigsäureanhydrid enthielt. Es wurde solange bei einer Sumpftemperatur von max. 190 °C erhitzt, bis kein Methylacetat mehr anfiel. Eine GC-Umsatzkontrolle zeigte, dass im Sumpf noch dimeres Esteranhydrid vorhanden war, daher wurden bei einer Sumpftemperatur von ca. 185 °C noch 15.5 g (ca. 0.15 mol) Acetanhydrid zugetropft und weiteres Methylacetat abdestilliert. Nachdem kein Destillat mehr anfiel, wurde schrittweise Vakuum angelegt, wobei überschüssiges Acetanhydrid abdestillierte. Das Reaktionsgemisch wurde im Stickstoffstrom abgekühlt, nachdem bei 1 mbar und 200 °C Sumpftemperatur keinerlei Destillatanfall mehr zu beobachten war. Eine ³¹P-NMR-Untersuchung des schwarzen Sumpfes zeigte, dass 91% Propanphosphonsäureanhydrid entstanden waren. Dies wurde durch einen Hydrolyseversuch, gefolgt von Silylierung und GC-Untersuchung der entstandenen Propanphosphonsäure, gestützt.
Die Reaktivdestillation des Rohprodukts bei 1-5 mbar/max. 290 °C erbrachte eine Ausbeute von 16.9 g (159 mmol, 53%) eines honigartig-zähen, braunen Destillats.

### Beispiel 2

### Herstellung von Propanphosphonsäureanhydrid aus Propanphosphonsäuredimethylester und Acetanhydrid mit Phosphorsäure als Katalysator

50.45 g (332 mmol) Propanphosphonsäuredimethylester, 23.1 g (226 mmol) Acetanhydrid und 2 g 85 %ige Phosphorsäure als Katalysator wurden in einer Apparatur wie in Beispiel 1 auf eine Temperatur von 170 bis 185 °C erhitzt. Nach drei Stunden wurde der Destillatanfall (Methylacetat, Kopftemperatur ca. 53 °C) langsamer, und weitere 2 g 85 %iger Phosphorsäure wurden nachdosiert, 3 h später weitere 12 g Acetanhydrid (118 mmol). Nach weiteren 5 h wurden nachmals 10 g (98 mmol) Acetanhydrid nachdosiert, nach weiteren 2.5 h fiel kein Destillat mehr an. Nach Entfernung restlicher flüchtiger Bestandteil im Hochvakuum ließ man den Sumpf im Stickstoffstrom abkühlen. Eine ³¹P-NMR-Untersuchung des braunen Sumpfes ergab einen Anhydridgehalt von 96.4%.
Nach Destillation wie in Beispiel 1 wurden 27.68 g (261 mmol, 79%) eines farblosen bis gelblichen, honigartigen Materials erhalten.

### Beispiel 3

### Herstellung von Propanphosphonsäureanhydrid aus Propanphosphonsäuredimethylester und Acetanhydrid mit para-Toluolsulfonsäure als Katalysator

Es wurden analog zu Beispiel 2 (s.o.) 61 g Propanphosphonsäuredimethylester (0.4 mol) mit zunächst 16g Acetanhydrid (0.157 mol) und 1.9g para-Toluolsulfonsäure-Monohydrat als Katalysator vorgelegt und auf 180 bis 190 °C (Sumpftemperatur) erhitzt. Sobald die Sumpftemperatur auf >195°C anstieg oder sich der Destillatanfall deutlich verringerte, wurde weiteres Acetanhydrid zugegeben (insgesamt noch 48 g (0.47 mol)), bis die Kopftemperatur bei Destillatanfall 100 °C nicht mehr unterschritt. Nach Entfernung flüchtiger Bestandteile im Hochvakuum wurde per ³¹P-NMR-Spektroskopie ein Anhydridgehalt von 92% bestimmt.
Nach Destillation wie in Beispiel 1 wurden 31.41 g (0.296 mol, 74%) eines farblosen bis gelblichen, honigartigen Materials erhalten.

### Beispiel 4

### Herstellung von Propanphosphonsäureanhydrid aus Propanphosphonsäuredimethylester und Acetanhydrid mit Trifluormethansulfonsäure als Katalysator

Analog zu Beispiel 3 wurden 40.5 g Propanphosphonsäuredimethylester (266 mmol) in Gegenwart von 2 g Trifluormethansulfonsäure mit insgesamt 36 g Acetanhydrid (353 mmol) umgesetzt. Nach Destillation wurden 21.1 g (199 mmol, 75%) Material erhalten.

### Beispiel 5

### Herstellung von Propanphosphonsäureanhydrid aus Propanphosphonsäuredimethylester und Acetanhydrid mit Yttriumtrifluormethansulfonat als Katalysator

Analog zu Beispiel 3 wurden 25 g Propanphosphonsäuredimethylester (164 mmol) in Gegenwart von 1 g Yttriumtriflat als Katalysator mit insgesamt 24 g Acetanhydrid (235 mmol) umgesetzt. Die Destillation des Produkts in einer Mikrodestillationsapparatur ergab eine Ausbeute von 11.76 g (111 mmol, 68%).

### Beispiel 6

### Herstellung von Propanphosphonsäureanhydrid aus Propanphosphonsäuredimethylester und Propionsäureanhydrid mit Propanphosphonsäure bzw. Propionsäure als Katalysator

Analog zu Beispiel 3 wurden 250 g Propanphosphonsäuredimethylester (1.64 mol) in Gegenwart von 10 g Propanphosphonsäure mit insgesamt 250g (1.92 mol) Propionsäureanhydrid umgesetzt, wobei zunächst sehr langsam Methylpropionat abdestilliert wurde. Die aus Propanphosphonsäure und Propionsäureanhydrid entstandene Propionsäure wurde zusammen mit nicht umgesetztem Propionsäureanhydrid im Vakuum abdestilliert, so dass ein katalysatorfreies Rohprodukt erhalten wurde. Man erhielt als Rohausbeute 176.3 g (ca. 1.66 mol, ca. 97% bez. auf 100% Gehalt).

### Beispiel 7

### Herstellung von Methanphosphonsäureanhydrid aus Methanphosphonsäuredimethyl-ester und Acetanhydrid mit para-Toluolsulfonsäure als Katalysator

Es wurden analog zu Beispiel 3 (s.o.) 10 g Methanphosphonsäuredimethylester (80.6 mmol) mit 12.25 g Acetanhydrid (120 mmol) und 1 g para-ToluolsulfonsäureMonohydrat als Katalysator umgesetzt. Nach Destillation im Hochvakuum wurden 2.57 g (33 mmol, 41%) eines gelblichen Feststoffs mit einem Schmelzbereich 107 bis 110°C erhalten. Die geringe Ausbeute ist auf die Flüchtigkeits des Methanphosphonsäuredimethylesters bei der Reaktionstemperatur zurückzuführen.

### Beispiel 8

### Herstellung von Propanphosphonsäureanhydrid aus Propanphosphonsäuredimethylester und Propionylchlorid mit Phosphorsäure als Katalysator

25 g Propanphosphonsäuredimethylester (164 mmol) und 2 g Phosphorsäure als Katalysator wurden mit 42.5 g Propionylchlorid (459 mmol) zum Rückfluß erhitzt. Über einen Blasenzähler wurde die Chlormethan-Bildung verfolgt. Nachdem keine weitere Chlormethan-Bildung mehr detektierbar war, wurden das gebildete Methylpropionat und überschüssiges Propionylchlorid destillativ entfernt. Die Hochvakuum-Destillation des Produkts in einer Mikrodestillationsapparatur ergab eine Ausbeute von 10.79 g (102 mmol, 62%).

## Patentansprüche

1. Verfahren zur Herstellung von Phosphonsäureanhydriden IV durch Umsetzung von Phosphonsäureestern I mit Carbonsäureanhydriden II, in Gegenwart oder Abwesenheit eines Katalysators III, gemäß folgender Reaktionsgleichung 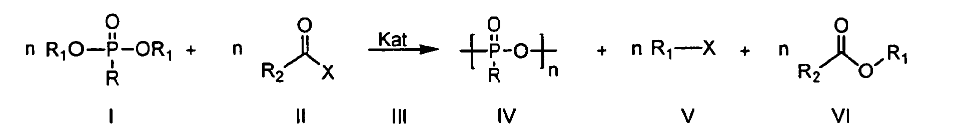 wobei
R für C₃-C₈-Allyl, C₆-C₁₀-Aryl oder C₁-C₈-Alkyl steht, wobei der Alkylrest im Falle der C₃-C₈-Verbindungen geradkettig, verzweigt oder cyclisch ist, oder für C₆-C₁₂-Aryloxy, C₃-C₁₀-Allyloxy oder C₁- C₈-Alkyloxy steht, wobei der Alkyoxyrest im Falle der C₃-C₈-Verbindungen geradkettig, verzweigt oder cyclisch ist und wobei alle genannten Substituenten gegebenenfalls ein- oder mehrfach mit identischen oder nicht identischen, nicht an der Reaktion teilnehmenden Funktionen substituiert sind;
X für O-(C=O)-R₃, Chlor oder Brom steht;
R1 welches in Formel I identisch oder verschieden ist, für C₆-C₁₀-Aryl oder C₁-C₈-Alkyl steht, wobei der Alkylrest im Falle der C₃-C₈-Verbindungen geradkettig, verzweigt oder cyclisch ist, und wobei alle genannten Substituenten gegebenenfalls ein- oder mehrfach mit identischen oder nicht identischen, nicht an der Reaktion teilnehmenden Funktionen, substituiert sind;
R2 und R3 gleich oder verschieden sind und die Bedeutung von R1 haben
n für eine natürliche Zahl von 2 bis 200 steht;
Kat optional ist und für eine Brønsted- oder Lewis-Säure steht.

2. Verfahren nach Anspruch 1, **dadurch gekennzeichnet, dass** die beiden R1 in Formel I identisch sind und R1 und R2 unabhängig voneinander C₁- bis C₄-Alkyl bedeutet, welches geradkettig ist oder im Falle der C₃-C₄-Alkyle verzweigt, oder cyclisch sein kann und X Chlor oder Brom ist, bevorzugt sind R2 und R3 ebenfalls identisch und ganz besonders bevorzugt ist R1=R2=R3=Methyl und R=Methyl, Ethyl, Propyl, Isopropyl, Butyl, Isobutyl oder tert-Butyl.

3. Verfahren nach mindestens einem der vorhergehenden Ansprüche, **dadurch gekennzeichnet, dass** 0 bis 5 mol% der Verbindung III eingesetzt werden.

4. Verfahren nach mindestens einem der vorhergehenden Ansprüche, **gekennzeichnet dadurch, dass** die Reaktion ohne Lösungsmittel durchgeführt wird.

5. Verfahren nach mindestens einem der vorhergehenden Ansprüche, **gekennzeichnet dadurch, dass** als Katalysator III konzentrierte Schwefelsäure, Phosphorsäure, eine Carbonsäure, eine Sulfonsäure, eine Phosphonsäure, ein saures lonentauscherharz, eine Perfluoralkansulfonsäure, deren Salze oder Perfluoralkancarbonsäure eingesetzt wird.

6. Verfahren nach Anspruch 5, **dadurch gekennzeichnet, dass** als Katalysator Chloressigsäure, Trichloressigsäure, Fluoressigsäure, Trifluoressigsäure, Scandium-, Yttrium- oder Lanthantriflat oder ein Lanthanoidtriflat eingesetzt wird.

7. Verfahren nach mindestens einem der vorhergehenden Ansprüche, **dadurch gekennzeichnet, dass** zwischen 0.5 und 5 mol% des Katalysators III bezogen auf die Menge an Phosphonsäurediester eingesetzt werden.

8. Verfahren nach mindestens einem der vorhergehenden Ansprüche, **dadurch gekennzeichnet, dass** ein Bruchteil der benötigten Menge an Carbonsäureanhydrid II zu Reaktionsbeginn vorgelegt wird.

9. Verfahren nach mindestens einem der vorhergehenden Ansprüche, **dadurch gekennzeichnet, dass** die Nebenprodukte V und VI destillativ aus dem Reaktionsgemisch entfernt werden.

10. Verfahren nach mindestens einem der vorhergehenden Ansprüche, **dadurch gekennzeichnet, dass** das Reaktionsgemisch oder das durch Destillation erhaltene IV, mit Aktivkohle behandelt wird.

11. Verfahren nach mindestens einem der vorhergehenden Ansprüche, **dadurch gekennzeichnet, dass** das erhaltene Rohprodukt in Gegenwart oder Abwesenheit einer gegenüber IV nicht reaktiven Base, ohne weitere Reinigung weiterverwendet wird.

12. Verfahren nach mindestens einem der vorhergehenden Ansprüche, **dadurch gekennzeichnet, dass** der Katalysator destillativ entfernt wird.

13. Verfahren nach mindestens einem der vorhergehenden Ansprüche, **dadurch gekennzeichnet, dass** im Anschluss an die Bildung des Phosphonsäureanhydrids eine Reaktivdestillation zur Isolierung des Produkts als cyclisches Trimer durchgeführt wird.

14. Verfahren nach Anspruch 13, **dadurch gekennzeichnet, dass** Anhydridbildung und Reaktivdestillation als Ein-Topf-Prozeß ausgeführt werden.

15. Verfahren nach mindestens einem der vorhergehenden Ansprüche, **gekennzeichnet dadurch, dass** Propanphosphonsäureanhydrid aus Propanphosphonsäuredimethylester und Acetanhydrid oder Acetylchlorid hergestellt wird.

## Claims

1. Process for preparing phosphonic anhydrides IV by reacting phosphonic esters I with carboxylic anhydrides II in the presence or absence of a catalyst III, according to the following reaction equation 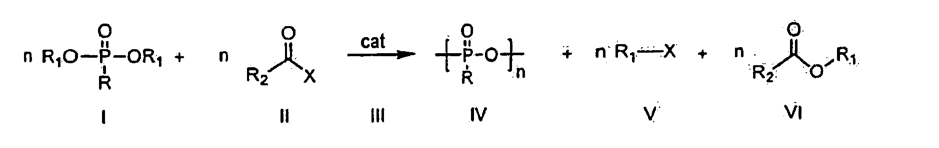 where
R is C₃-C₈-allyl, C₆-C₁₀-aryl or C₁-C₈-alkyl, where the alkyl radical in the case of the C₃-C₈-compounds is linear, branched or cyclic, or is C₆-C₁₂-aryloxy, C₃-C₁₀-allyloxy or C₁-C₈-alkyloxy, where the alkyloxy radical in the case of the C₃-C₈ compounds is linear, branched or cyclic and all substituents mentioned are optionally substituted by one or more, identical or different functions which do not participate in the reaction;
X is O-(C=O)-R₃, chlorine or bromine;
R1, which is identical or different in formula I, is C₆-C₁₀-aryl or C₁-C₈-alkyl, where the alkyl radical in the case of the C₃-C₈ compounds is linear, branched or cyclic, and all substituents mentioned are optionally substituted by one or more, identical or different functions which do not participate in the reaction;
R2 and R3 are identical or different and have the meaning of R1,
n is a natural number from 2 to 200;
cat is optional and is a Brønsted or Lewis acid.

2. Process according to Claim 1, **characterized in that** the two radicals R1 in formula I are identical and R1 and R2 are each, independently of one another, C₁-C₄-alkyl which is linear or in the case of the C₃-C₄-alkyls can be branched or cyclic and X is chlorine or bromine, and R2 and R3 are preferably likewise identical and particular preference is given to R1 = R2 = R3 = methyl and R = methyl, ethyl, propyl, isopropyl, butyl, isobutyl or tert-butyl.

3. Process according to at least one of the preceding claims, **characterized in that** from 0 to 5 mol% of the compound III are used.

4. Process according to at least one of the preceding claims, **characterized in that** the reaction is carried out without solvent.

5. Process according to at least one of the preceding claims, **characterized in that** concentrated sulphuric acid, phosphoric acid, a carboxylic acid, a sulphonic acid, a phosphonic acid, an acidic ion-exchange resin, a perfluoroalkanesulphonic acid, a salt thereof or perfluoroalkanecarboxylic acid is used as catalyst III.

6. Process according to Claim 5, **characterized in that** chloroacetic acid, trichloroacetic acid, fluoroacetic acid, trifluoroacetic acid, scandium triflate, yttrium triflate or lanthanum triflate or a lanthanoid triflate is used as catalyst.

7. Process according to at least one of the preceding claims, **characterized in that** from 0.5 to 5 mol% of the catalyst III, based on the amount of phosphonic diester, are used.

8. Process according to at least one of the preceding claims, **characterized in that** a fraction of the required amount of carboxylic anhydride II is initially charged at the beginning of the reaction.

9. Process according to at least one of the preceding claims, **characterized in that** the by-products V and VI are removed by distillation from the reaction mixture.

10. Process according to at least one of the preceding claims, **characterized in that** the reaction mixture or the IV obtained by distillation is treated with activated carbon.

11. Process according to at least one of the preceding claims, **characterized in that** the crude product obtained is used further without further purification in the presence or absence of a base which does not react with IV.

12. Process according to at least one of the preceding claims, **characterized in that** the catalyst is removed by distillation.

13. Process according to at least one of the preceding claims, **characterized in that** a reactive distillation to isolate the product as cyclic trimer is carried out after the formation of the phosphonic anhydride.

14. Process according to Claim 13, **characterized in that** anhydride formation and reactive distillation are carried out as a one-pot process.

15. Process according to at least one of the preceding claims, **characterized in that** propanephosphonic anhydride is prepared from dimethyl propanephosphonate and acetic anhydride or acetyl chloride.

## Revendications

1. Procédé pour la fabrication d'anhydrides d'acide phosphonique IV en faisant réagir des esters d'acide phosphonique I avec des anhydrides d'acide carboxylique II en présence ou en l'absence d'un catalyseur III, selon le schéma réactionnel suivant : 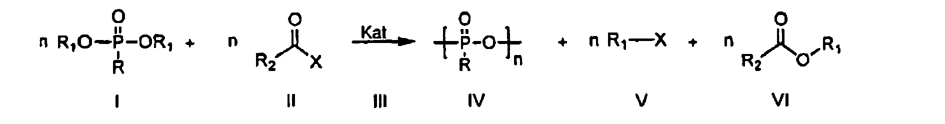 dans lequel
R représente un groupement allyle en C₃-C₈, aryle en C₆-C₁₀ ou alkyle en C₁-C₈, le radical alkyle étant, dans le cas des composés en C₃-C₈, linéaire, ramifié ou cyclique, ou un groupement aryloxy en C₆-C₁₂, allyloxy en C₃-C₁₀ ou alkyloxy en C₁-C₈, le radical alkyloxy étant, dans le cas des composés en C₃-C₈, linéaire, ramifié ou cyclique, et tous les substituants cités étant substitués éventuellement une ou plusieurs fois par des fonctions identiques ou non identiques ne participant pas à la réaction ;
X représente O-(C=O)-R₃, le chlore ou le brome ;
R1, qui est identique ou différent dans la formule I, représente un groupement aryle en C₆-C₁₀ ou alkyle en C₁-C₈, le radical alkyle étant, dans le cas des composés en C₃-C₈, linéaire, ramifié ou cyclique, et tous les substituants cités étant substitués éventuellement une ou plusieurs fois par des fonctions identiques ou non identiques ne participant pas à la réaction ;
R2 et R3 sont identiques ou différents et ont la signification de R1,
n est un nombre naturel valant 2 à 200 ;
Kat est facultatif et représente un acide de Brønsted ou de Lewis.

2. Procédé selon la revendication 1, **caractérisé en ce que** les deux radicaux R1 sont identiques dans la formule I et R1 et R2 représentent, indépendamment l'un de l'autre, un alkyle en C₁ à C₄, qui est linéaire ou qui, dans le cas des alkyles en C₃-C₄, peut être ramifié ou cyclique et X représente le chlore ou le brome, les radicaux R2 et R3 sont de préférence également identiques et, mieux encore, R1 = R2 = R3 = méthyle et R = méthyle, éthyle, propyle, isopropyle, butyle, isobutyle ou tert-butyle.

3. Procédé selon au moins l'une quelconque des revendications précédentes, **caractérisé en ce que** l'on utilise 0 à 5 % en mole du composé III.

4. Procédé selon au moins l'une quelconque des revendications précédentes, **caractérisé en ce que** la réaction est réalisée sans solvant.

5. Procédé selon au moins l'une quelconque des revendications précédentes, **caractérisé en ce que** l'on utilise, comme catalyseur III, de l'acide sulfurique concentré, de l'acide phosphorique concentré, un acide carboxylique, un acide sulfonique, un acide phosphonique, une résine d'échange ionique acide, un acide perfluoroalcanesulfonique, leurs sels ou un acide perfluoroalcanecarboxylique.

6. Procédé selon la revendication 5, **caractérisé en ce que** l'on utilise, comme catalyseur, de l'acide chloroacétique, de l'acide trichloroacétique, de l'acide fluoroacétique, de l'acide trifluoroacétique, du triflate de scandium, d'yttrium ou de lanthane ou un triflate de lanthanide.

7. Procédé selon au moins l'une quelconque des revendications précédentes, **caractérisé en ce que** l'on utilise entre 0,5 et 5 % en mole du catalyseur III, par rapport à la quantité de diester d'acide phosphonique.

8. Procédé selon au moins l'une quelconque des revendications précédentes, **caractérisé en ce que** l'on incorpore une fraction de la quantité nécessaire d'anhydride d'acide carboxylique II au début de la réaction.

9. Procédé selon au moins l'une quelconque des revendications précédentes, **caractérisé en ce que** les produits secondaires V et VI sont éliminés du mélange réactionnel par distillation.

10. Procédé selon au moins l'une quelconque des revendications précédentes, **caractérisé en ce que** le mélange réactionnel, ou le composé IV obtenu par distillation, est traité avec du charbon actif.

11. Procédé selon au moins l'une quelconque des revendications précédentes, **caractérisé en ce que** le produit brut obtenu est encore utilisé en présence ou en l'absence d'une base non réactive vis-à-vis du composé IV, sans autre purification.

12. Procédé selon au moins l'une quelconque des revendications précédentes, **caractérisé en ce que** le catalyseur est éliminé par distillation.

13. Procédé selon au moins l'une quelconque des revendications précédentes, **caractérisé en ce qu'**après la formation de l'anhydride d'acide phosphonique, on réalise une distillation réactive pour isoler le produit sous forme de trimère cyclique.

14. Procédé selon la revendication 13, **caractérisé en ce que** la formation d'anhydride et la distillation réactive sont effectuées selon un procédé en un seul pot.

15. Procédé selon au moins l'une quelconque des revendications précédentes, **caractérisé en ce que** l'on fabrique l'anhydride d'acide propanephosphonique à partir de l'ester diméthylique d'acide propanephosphonique et d'anhydride acétique ou de chlorure d'acétyle.
